(19) Europäisches Patentamt / European Patent Office / Office européen des brevets

(11) **EP 2 732 592 B1**

(12) **FASCICULE DE BREVET EUROPEEN**

(45) Date de publication et mention
de la délivrance du brevet:
**31.10.2018 Bulletin 2018/44**

(21) Numéro de dépôt: **12731487.0**

(22) Date de dépôt: **05.07.2012**

(51) Int Cl.:
*H04L 27/18* (2006.01)   *H04L 27/22* (2006.01)
*H04L 27/233* (2006.01)   *H04L 27/26* (2006.01)
*H04L 27/38* (2006.01)

(86) Numéro de dépôt international:
**PCT/EP2012/063194**

(87) Numéro de publication internationale:
**WO 2013/007613 (17.01.2013 Gazette 2013/03)**

(54) **PROCÉDÉ ET MODULE D'ESTIMATION DE BIAS FRÉQUENTIEL DANS UN SYSTÈME DE TÉLÉCOMMUNICATIONS NUMÉRIQUES**

VERFAHREN UND MODUL ZUR SCHÄTZUNG DER FREQUENZVERZERRUNG IN EINEM SYSTEM FÜR DIGITALE TELEKOMMUNIKATION

METHOD AND MODULE FOR FREQUENCY BIAS ESTIMATION IN A SYSTEM FOR DIGITAL TELECOMMUNICATIONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.07.2011 FR 1156304**

(43) Date de publication de la demande:
**21.05.2014 Bulletin 2014/21**

(73) Titulaire: **SIGFOX**
**31670 Labège (FR)**

(72) Inventeurs:
- **ARTIGUE, Cédric**
  **F-31400 Toulouse (FR)**
- **FOURTET, Christophe**
  **F-82170 Pompignan (FR)**
- **VERTES, Marc**
  **F-31470 Saint-Lys (FR)**

(74) Mandataire: **Ipside**
**6, Impasse Michel Labrousse**
**31100 Toulouse (FR)**

(56) Documents cités:
**US-B1- 6 567 480**

- **BERGOGNE C ET AL: "Reduced complexity frequency estimator for burst transmission", IEEE GLOBAL TELECOMMUNICATIONS CONFERENCE, vol. 2, 13 novembre 1995 (1995-11-13), - 17 novembre 1995 (1995-11-17), pages 1318-1322, XP010164436, NY, USA DOI: 10.1109/GLOCOM.1995.502615 ISBN: 978-0-7803-2509-8**
- **BELLINI S: "Digital frequency estimators for M-PSK", 3RD EUROPEAN CONFERENCE ON SATELLITE COMMUNICATIONS - ECSC-3, 1 janvier 1993 (1993-01-01), pages 362-366, XP006513460, UK ISBN: 978-0-85296-603-7**
- **ZHANG JINGYAN ET AL: "Cyclostationarity-based symbol timing and carrier frequency offset estimation for OFDM system", IEEE INTERNATIONAL CONFERENCE ON COMPUTER APPLICATION AND SYSTEM MODELING, 22 octobre 2010 (2010-10-22), pages V5-546, XP031788918, NJ, USA ISBN: 978-1-4244-7235-2**

**Description**

DOMAINE TECHNIQUE

La présente invention appartient au domaine des télécommunications numériques. La présente invention concerne plus particulièrement l'estimation d'un biais fréquentiel affectant une trame de symboles émise par un terminal et reçue par une station d'un système de télécommunications numériques.

ÉTAT DE LA TECHNIQUE

L'invention trouve une application particulièrement avantageuse dans les télécommunications sans fil sur fréquence porteuse.

On entend par « sur fréquence porteuse », que l'émission d'une trame de symboles par un terminal comprend une étape de translation en fréquence de ladite trame de fréquences visant à modifier une fréquence centrale du spectre fréquentiel de la trame de fréquences.

En effet, la génération d'une trame de symboles s'effectue en pratique autour d'une fréquence nulle, en « bande de base », et cette trame de symboles doit être translatée autour d'une fréquence porteuse non nulle, en particulier pour des raisons de partage de ressource fréquentielle.

L'émission d'une trame de symboles sur fréquence porteuse s'effectue sous la forme d'un signal radioélectrique, qui est ensuite reçu par une station du système de télécommunications. La station doit alors extraire les données émises par le terminal, et cette extraction comprend notamment une ou plusieurs étapes de translation en fréquence du signal radioélectrique, visant à ramener la trame de symboles en bande de base, ainsi qu'une étape de conversion analogique / numérique (A/D pour « Analog to Digital ») du signal reçu en vue d'extraire les données par des moyens de calcul numériques.

Toutefois, le signal numérique, représentatif du signal radioélectrique reçu par la station, est généralement affecté par un biais fréquentiel qui, s'il n'est pas suffisamment compensé, perturbe l'extraction des données.

Un tel biais fréquentiel peut provenir notamment :

- d'une dérive fréquentielle de moyens de synthèse fréquentielle du terminal, entraînant une erreur sur la fréquence centrale du spectre fréquentiel du signal radioélectrique émis, qui est différente de la fréquence porteuse souhaitée,
- d'une erreur d'estimation de la fréquence centrale du spectre fréquentiel du signal radioélectrique au niveau de la station,
- d'une dérive fréquentielle de moyens de synthèse fréquentielle de la station, entraînant une erreur sur la fréquence centrale utilisée pour translater en fréquence le signal radioélectrique reçu pour ramener la trame de symboles en bande de base,
- d'un déplacement relatif du terminal par rapport à la station, qui s'accompagne d'une translation en fréquence indésirable du spectre fréquentiel du signal radioélectrique, connue sous le nom d'effet Doppler, etc.

Par conséquent, le signal numérique, à partir duquel les données émises par le terminal doivent être extraites, peut être affecté par un biais fréquentiel correspondant à un écart entre une fréquence centrale supposée du spectre fréquentiel du signal numérique, généralement la fréquence nulle, et une fréquence centrale réelle dudit spectre fréquentiel du signal numérique.

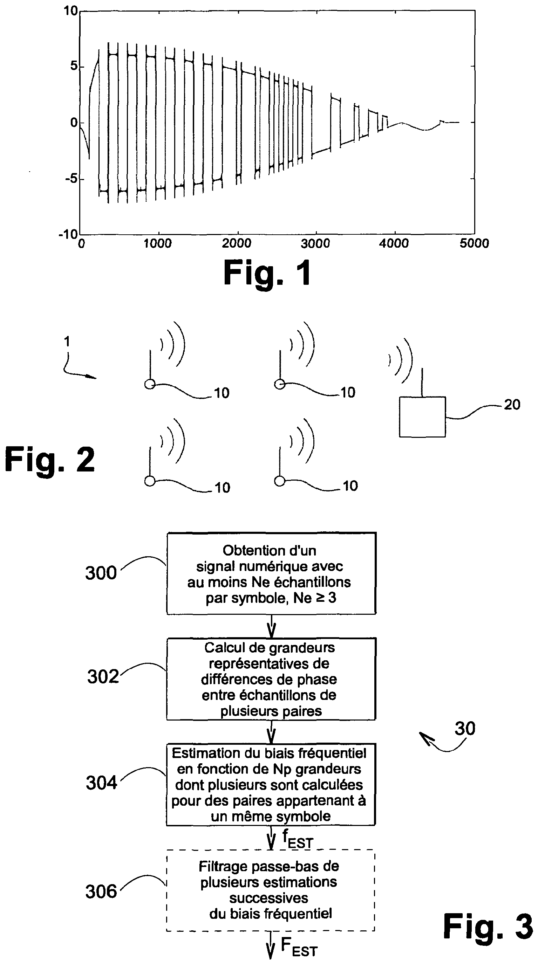

La figure 1 représente un exemple de perturbations introduites par un biais fréquentiel résiduel affectant un signal numérique correspondant à une trame de symboles BPSK (« Binary Phase Shift Keying »). On constate sur cette figure que l'amplitude des symboles BPSK varie fortement, et qu'une inversion de signe desdits symboles BPSK peut se produire. On comprend donc que, si le biais fréquentiel n'est pas estimé et corrigé, les performances de l'extraction de données émises par le terminal seront très dégradées.

Il est connu, notamment dans les systèmes de télécommunications mobiles cellulaires tel que le système GSM (« Global System for Mobile Communications »), d'insérer des séquences d'apprentissage dans la trame de symboles. Une séquence d'apprentissage est un ensemble de symboles connus a priori du terminal et de la station, ne correspondant par conséquent pas à des données utiles émises par le terminal. Du fait que la station connaît les symboles constituant ces séquences d'apprentissage, elle pourra estimer le biais fréquentiel par comparaison des séquences d'apprentissage avec les symboles du signal numérique correspondant aux séquences d'apprentissage.

Toutefois, l'insertion de telles séquences d'apprentissage réduit l'efficacité de l'échange de données entre un terminal et une station, efficacité qui correspond au taux de données utiles (c'est à dire des données non connues a priori de la station réceptrice) par trame.

Ceci est particulièrement pénalisant dans les systèmes à bas débit, dans lesquels les trames émises peuvent ne comporter que quelques symboles (par exemple de l'ordre de la dizaine ou de la centaine de symboles). Une autre solution est connue dans la demande US 6 567 480 B1 qui propose un procédé d'estimation d'un biais fréquentiel basé sur les calculs des écarts de phase entre des symboles successifs.

## EXPOSÉ DE L'INVENTION

La présente invention vise à fournir une solution permettant d'estimer un biais fréquentiel affectant un signal numérique ne nécessitant pas l'insertion de séquences d'apprentissage dans une trame de symboles (c'est-à-dire que l'estimation du biais fréquentiel peut s'effectuer de manière « aveugle »).

La présente invention trouve une application avantageuse, bien que nullement limitative, dans les systèmes de télécommunications à bas débit dans lesquels les trames émises comportent un nombre réduit de symboles, par exemple moins de quelques dizaines de symboles.

La présente invention vise également, de manière plus générale, à fournir un système de télécommunications numériques dans lequel les terminaux sont simples et peu coûteux à mettre en oeuvre.

Selon un premier aspect, l'invention concerne un procédé d'estimation d'un biais fréquentiel affectant un signal numérique représentatif d'une trame de symboles émise par un terminal à destination d'une station d'un système de télécommunications numériques, ledit biais fréquentiel correspondant à un écart entre une fréquence centrale supposée d'un spectre fréquentiel du signal numérique et une fréquence centrale réelle dudit spectre fréquentiel. Selon l'invention, le procédé d'estimation comporte les étapes de :

- obtention du signal numérique par échantillonnage d'un signal analogique, représentatif de la trame de symboles, avec une période d'échantillonnage Te inférieure à une durée prédéfinie de chacun des symboles de la trame, telle que le signal numérique comporte au moins trois échantillons par symbole,
- estimation du biais fréquentiel affectant le signal numérique en fonction de grandeurs calculées pour Np paires d'échantillons choisies de sorte que plusieurs desdites Np paires appartiennent nécessairement à un même symbole de la trame, chaque grandeur étant représentative d'une différence de phase entre les échantillons de la paire d'échantillons considérée, les échantillons de chacune des Np paires étant séparés par un même nombre D non nul de périodes d'échantillonnage.

Du fait que le signal numérique comporte au moins trois échantillons par symbole, on comprend qu'il est possible d'avoir plusieurs paires dont les échantillons appartiennent tous à un même symbole (en choisissant D de telle sorte que le signal numérique comporte au moins deux paires d'échantillons consécutives par symbole). Par exemple, si le signal numérique comporte exactement trois échantillons par symbole, alors chaque symbole comportera deux paires d'échantillons en choisissant D égal à un.

La différence de phase entre deux échantillons appartenant à un même symbole étant indépendante de la phase du symbole, on comprend qu'il est avantageux, pour estimer le biais fréquentiel de manière « aveugle », de considérer des grandeurs calculées pour des paires d'échantillons appartenant à un même symbole. En outre, en considérant plusieurs paires d'échantillons appartenant à un même symbole, on comprend que le biais fréquentiel pourra être estimé même si la trame comporte un nombre réduit de symboles.

Suivant des modes particuliers de mise en oeuvre, le procédé d'estimation de biais fréquentiel comporte l'une ou plusieurs des caractéristiques suivantes, prises isolément ou suivant toutes les combinaisons techniquement possibles.

De préférence, le biais fréquentiel est estimé en fonction de grandeurs calculées pour Np paires d'échantillons choisies de sorte que tous les échantillons desdites Np paires appartiennent nécessairement à au plus deux symboles consécutifs de la trame. De préférence, le nombre D est égal à un, de sorte qu'une seule paire, parmi les Np paires d'échantillons, peut être constituée d'échantillons appartenant à des symboles différents.

De préférence, la période d'échantillonnage Te est telle que le signal numérique comporte au moins dix échantillons par symbole, de préférence au moins cent échantillons par symbole.

De préférence, le biais fréquentiel $f_{EST}$ est estimé selon l'expression suivante :

$$f_{EST} = \frac{1}{2 \cdot q \cdot D \cdot \pi \cdot Te} \cdot \arg\left(\sum_{n=0}^{Np-1}\left(r(n_0 + D + n) \cdot r^*(n_0 + n)\right)^q\right) - F_0$$

expression dans laquelle :

- $r(n)$ est un échantillon du signal numérique correspondant à l'instant d'échantillonnage $n \cdot Te$, $r(n_0)$ étant le premier échantillon des échantillons des Np paires considérées,

- r*(n) est le complexe conjugué de r(n),
- arg(x) correspond à la phase du nombre complexe x,
- q est soit égal à un soit égal à un nombre pair,
- $F_0$ est la fréquence centrale supposée du signal numérique.

De préférence, plusieurs estimations du biais fréquentiel sont réalisées en fonction de grandeurs calculées pour des ensembles différents de paires d'échantillons, et en ce que le procédé comporte une étape de filtrage passe-bas desdites estimations du biais fréquentiel.

Selon un second aspect, l'invention concerne un procédé de télécommunications pour échanger des données entre un terminal et une station d'un système de télécommunications numériques, lesdites données étant échangées sous la forme d'une trame de symboles. Le procédé de télécommunications comporte les étapes de :

- émission, par le terminal, d'une trame de symboles sous la forme d'un signal radioélectrique dont le spectre fréquentiel instantané est de largeur inférieure à une dérive fréquentielle d'un moyen de synthèse fréquentielle dudit terminal,
- réception dudit signal radioélectrique par la station,
- estimation d'un biais fréquentiel affectant un signal numérique représentatif du signal radioélectrique conformément à un procédé d'estimation selon l'invention,
- compensation du biais fréquentiel affectant le signal numérique en fonction de l'estimation dudit biais fréquentiel,
- extraction des données émises par le terminal.

Selon un troisième aspect, l'invention concerne un module d'estimation d'un biais fréquentiel affectant un signal numérique représentatif d'une trame de symboles émise par un terminal à destination d'une station, ledit biais fréquentiel correspondant à un écart entre d'une part une fréquence centrale supposée d'un spectre fréquentiel du signal numérique et d'autre part une fréquence centrale réelle dudit spectre fréquentiel. Selon l'invention, le module d'estimation comporte des moyens configurés pour estimer le biais fréquentiel affectant le signal numérique conformément à un procédé d'estimation selon l'invention.

Selon un quatrième aspect, l'invention concerne une station d'un système de télécommunications numériques, ladite station comportant un module d'estimation de biais fréquentiel selon l'invention.

Selon un cinquième aspect, l'invention concerne un système de télécommunications numériques comportant :

- une station selon l'invention,
- au moins un terminal configuré pour émettre des données sous la forme de signaux radioélectriques dont le spectre fréquentiel instantané est de largeur inférieure à une dérive fréquentielle d'un moyen de synthèse fréquentielle dudit au moins terminal.

## PRÉSENTATION DES FIGURES

L'invention sera mieux comprise à la lecture de la description suivante, donnée à titre d'exemple nullement limitatif, et faite en se référant aux figures qui représentent :

- Figure 1 : déjà décrite, un exemple de perturbations introduites par un biais fréquentiel résiduel affectant un signal numérique,
- Figure 2 : une représentation schématique d'un système de télécommunications comportant une station et une pluralité de terminaux,
- Figure 3 : un diagramme représentant schématiquement les principales étapes d'un procédé d'estimation de biais fréquentiel,
- Figure 4 : un diagramme représentant schématiquement les principales étapes d'un procédé de télécommunications,
- Figure 5 : une représentation schématique d'un exemple d'occupation d'une sous-bande fréquentielle par un signal radioélectrique émis par un terminal,
- Figure 6 : une représentation schématique d'un exemple de variation, au cours en fonction de la température, de l'occupation d'une sous-bande fréquentielle par un terminal,
- Figure 7 : une représentation schématique d'un exemple de réalisation d'une station du système de télécommunications.

## DESCRIPTION DÉTAILLÉE DE MODES DE RÉALISATION

La figure 2 représente, de façon très schématique, un système 1 de télécommunications comprenant plusieurs terminaux 10 et une station 20.

Dans le contexte de l'invention, on entend de manière générale par « station » tout dispositif récepteur adapté à recevoir des signaux radioélectriques. La station 20 est par exemple l'un quelconque des terminaux 10, ou un dispositif particulier tel qu'un point d'accès à un réseau filaire ou non filaire de télécommunications, centralisant les données émises par chacun des terminaux 10.

On entend par « signal radioélectrique » une onde électromagnétique se propageant via des moyens non filaires, dont les fréquences sont comprises dans le spectre traditionnel des ondes radioélectriques (quelques hertz à plusieurs centaines de gigahertz) ou dans des bandes de fréquences voisines.

Il est à noter qu'on considère principalement le cas d'une émission de données par des terminaux 10 vers la station 20. L'émission éventuelle de données par la station 20 vers les terminaux 10 sort du cadre de l'invention.

Les terminaux 10 comportent des moyens d'émettre des signaux radioélectriques, considérés comme connus de l'homme de l'art. Chaque signal radioélectrique émis est de préférence un signal radioélectrique monoporteuse (par opposition à un signal radioélectrique multiporteuse du type OFDM - « Orthogonal Frequency Division Multiplexing »). En outre, un terminal 10 comporte de préférence une unité centrale du type comportant un processeur relié à une ou des mémoires électroniques dans lesquelles sont mémorisées des instructions de code de programme d'ordinateur. Suivant certains modes de réalisation, un terminal 10 comporte un ou des circuits logiques programmables de type FPGA, PLD, CPLD, etc.

La station 20 comporte des moyens de recevoir des signaux radioélectriques, considérés comme connus de l'homme de l'art. En outre, la station 20 comporte de préférence une unité centrale du type comportant un processeur relié à une ou des mémoires électroniques dans lesquelles sont mémorisées des instructions de code de programme d'ordinateur. Suivant certains modes de réalisation, la station 20 comporte un ou des circuits logiques programmables de type FPGA, PLD, CPLD, etc.

La présente invention concerne tout d'abord un procédé 30 d'estimation d'un biais fréquentiel affectant un signal numérique, représentatif d'une trame de symboles émise par un terminal 10, ledit procédé d'estimation étant mis en oeuvre au niveau de la station 20.

La figure 3 représente schématiquement les principales étapes d'un tel procédé 30 d'estimation, lesquelles sont :

- 300 obtention du signal numérique par échantillonnage d'un signal analogique représentatif de la trame de symboles émise par le terminal 10,
- 302 calcul de grandeurs pour plusieurs paires d'échantillons du signal numérique, chaque grandeur étant représentative d'une différence de phase entre les échantillons d'une paire d'échantillons,
- 304 estimation du biais fréquentiel affectant le signal numérique en fonction de grandeurs calculées pour plusieurs paires d'échantillons.

Au cours de l'étape 300 d'obtention du signal numérique, l'échantillonnage du signal analogique est réalisé avec une période d'échantillonnage Te inférieure à une durée Ts prédéfinie de chacun des symboles de la trame.

De la sorte, on assure que le signal numérique comporte plusieurs échantillons par symbole. La période d'échantillonnage Te est choisie, par rapport à la durée Ts, de sorte que le signal numérique comporte au moins Ne échantillons par symbole, Ne étant égal ou supérieur à trois.

Ne est défini comme étant égal à la partie entière du rapport Ts/Te, de sorte que le signal numérique comportera généralement Ne échantillons par symbole, mais pourra également comporter (Ne+1) échantillons par symbole. Dans la suite de la description, on se place de manière non limitative dans le cas où Ts est proportionnel à Te, de sorte que le signal numérique comporte toujours Ne échantillons par symbole.

De préférence, la période d'échantillonnage Te est choisie de sorte que Ne est très supérieur à trois, par exemple égal ou supérieur à dix voire à cent. L'intérêt d'avoir de telles valeurs de Ne réside dans le fait que l'estimation du biais fréquentiel pourra être améliorée et/ou accélérée.

En outre, on comprend que, dans le cas d'un système de télécommunications bas débit dans lequel les trames émises comportent un nombre réduit de symboles, le fait d'avoir plusieurs échantillons par symbole permet de compenser le fait que les trames comportent peu de symboles utilisables pour l'estimation du biais fréquentiel.

L'étape 300 permet d'obtenir un signal numérique constitué de plusieurs échantillons, l'échantillon correspondant à l'instant $n \cdot Te$ étant désigné dans la suite de l'exposé par r(n). L'échantillon r(n) peut par exemple s'exprimer comme suit, en faisant abstraction d'éventuels bruits additifs :

$$r(n) = s\left( E\left( \frac{n + nd}{Ne} \right) \right) \cdot e^{j \cdot 2 \cdot \pi \cdot (F_0 + fd) \cdot n \cdot Te} \qquad (e1)$$

L'expression (e1) est une expression approchée dans laquelle :

- fd est le biais fréquentiel affectant le signal numérique,
- j est l'unité imaginaire (telle que $j^2 = -1$),
- E(x) correspond à la partie entière de x,
- s(m) est le symbole à l'instant m·Ts,
- nd représente un décalage temporel, représentatif du fait que l'on ne connaît pas nécessairement les instants de transition entre un symbole de la trame et le symbole suivant de cette trame,
- $F_0$ est une fréquence centrale supposée du spectre fréquentiel du signal numérique.

Il est à noter que la fréquence centrale supposée $F_0$ peut être par exemple :

- la fréquence porteuse des signaux radioélectriques émis par le terminal 10; dans un tel cas, le signal analogique échantillonné correspond au signal reçu sur fréquence porteuse, ce qui est possible si cette fréquence porteuse n'est pas trop élevée (afin de pouvoir la sur-échantillonner de sorte à avoir au moins trois échantillons par symbole, voire davantage),
- une fréquence intermédiaire, inférieure à la fréquence porteuse, sur laquelle le signal reçu sur fréquence porteuse a été ramené,
- la fréquence nulle, auquel cas le signal numérique est dit « en bande de base ».

Dans la suite de la description, on se place de manière non limitative dans le cas où les symboles émis sont des symboles BPSK et dans le cas où s(m) = ± 1.

Au cours de l'étape 302, on calcule, pour plusieurs paires d'échantillons du signal numérique, des grandeurs représentatives de différences de phase entre les échantillons desdites paires. Les échantillons de chaque paire considérée sont séparés par un même nombre D non nul de périodes d'échantillonnage.

En outre, D est choisi tel que le signal numérique comporte plusieurs paires d'échantillons différentes par symbole de la trame. Deux paires d'échantillons sont différentes dès lors qu'elles ont au plus un échantillon commun. En pratique, pour assurer que le signal numérique comporte au moins deux paires d'échantillons différentes par symbole de la trame, D doit être égal ou inférieur à (Ne-2).

Dans un mode préféré de mise en oeuvre, les grandeurs calculées sont les suivantes :

$$g(n) = r(n + D) \cdot r^*(n)$$

D'après l'expression (e1), les grandeurs g(n) calculées peuvent s'exprimer sous la forme suivante :

$$g(n) = s\left( E\left( \frac{n + D + nd}{Ne} \right) \right) \cdot s^*\left( E\left( \frac{n + nd}{Ne} \right) \right) \cdot e^{j \cdot 2 \cdot \pi \cdot (F_0 + fd) \cdot D \cdot Te} \qquad (e2)$$

On comprend que, si les échantillons r(n+D) et r(n) appartiennent au même symbole BPSK, dans ce cas :

$$s\left( E\left( \frac{n + D + nd}{Ne} \right) \right) \cdot s^*\left( E\left( \frac{n + nd}{Ne} \right) \right) = 1$$

et :

$$g(n) = e^{j \cdot 2 \cdot \pi \cdot (F_0 + fd) \cdot D \cdot Te}$$

Dans ce cas, la seule inconnue est le biais fréquentiel fd.

Si au contraire les échantillons r(n+D) et r(n) n'appartiennent pas au même symbole BPSK, dans ce cas :

$$s\left(E\left(\frac{n + D + nd}{Ne}\right)\right) \cdot s^*\left(E\left(\frac{n + nd}{Ne}\right)\right) = \pm 1$$

et :

$$g(n) = \pm e^{j \cdot 2 \cdot \pi \cdot (F_0 + fd) \cdot D \cdot Te} \qquad (e3)$$

Dans ce cas, un saut de phase de $\pi$ s'ajoute lorsque les symboles BPSK auxquels appartiennent les échantillons r(n+D) et r(n) n'ont pas la même valeur. Les valeurs desdits symboles ne sont pas connues a priori lorsqu'il ne s'agit pas d'une séquence d'apprentissage, de sorte que l'on ne sait pas a priori si ce saut de phase est présent.

Dans tous les cas, les grandeurs g(n) calculées sont néanmoins bien représentatives de la différence de phase entre les échantillons r(n+D) et r(n).

Rien n'exclut, suivant d'autres exemples, de considérer d'autres expressions pour le calcul desdites grandeurs représentatives de la différence de phase entre échantillons d'une paire.

Au cours de l'étape 304, le biais fréquentiel affectant le signal numérique est estimé en fonction de Np grandeurs calculées pour des paires d'échantillons choisies de sorte que plusieurs desdites Np paires appartiennent nécessairement à un même symbole de la trame.

On comprend en effet que, le signal numérique comportant Ne échantillons par symbole et D étant choisi tel que le signal numérique comporte plusieurs paires d'échantillons différentes par symbole de la trame, on pourra aisément choisir les Np paires de sorte que plusieurs desdites Np paires appartiennent à un même symbole.

Ce sera par exemple nécessairement le cas lorsque l'on considère des paires consécutives d'échantillons, c'est-à-dire des paires {r(n+D+k), r(n+k)}, avec $0 \le k \le Np-1$.

On comprend que, en choisissant les Np paires d'échantillons de sorte que plusieurs paires appartiennent à un même symbole, on réduit considérablement le nombre de grandeurs susceptibles de comporter un saut de phase tel que discuté en référence à l'expression (e3).

Dans un mode particulièrement préféré de mise en oeuvre, le biais fréquentiel est estimé en fonction de grandeurs calculées pour Np paires d'échantillons choisies de sorte que tous les échantillons desdites Np paires appartiennent nécessairement à au plus deux symboles consécutifs de la trame. C'est par exemple le cas en considérant uniquement des paires consécutives d'échantillons, et en choisissant Np tel que $Np \le Ne-D+1$.

Dans des modes préférés de mise en oeuvre, D est égal à un (D = 1) afin de maximiser le nombre de paires d'échantillons par symbole, en particulier lorsque l'on considère des paires consécutives d'échantillons (chaque symbole comportant au moins (Ne-D) paires consécutives d'échantillons).

Dans une variante préférée de mise en oeuvre, le biais fréquentiel est estimé au moyen de grandeurs calculées pour des paires consécutives d'échantillons dont le premier échantillon est l'échantillon $r(n_0)$, selon l'expression suivante :

$$f_{EST} = \frac{1}{4 \cdot D \cdot \pi \cdot Te} \cdot \arg\left(\sum_{n=0}^{Np-1}\left(r(n_0 + D + n) \cdot r^*(n_0 + n)\right)^2\right) - F_0 \qquad (e4)$$

Il est à noter que, dans l'expression (e4), les grandeurs g(n) sont élevées au carré, de sorte que dans le cas de symboles BPSK, un saut de phase, éventuellement introduit lorsque les échantillons d'une paire appartiennent à deux symboles consécutifs, est supprimé.

De manière plus générale, le biais fréquentiel peut être estimé selon l'expression suivante :

$$f_{EST} = \frac{1}{2 \cdot q \cdot D \cdot \pi \cdot Te} \cdot \arg\left(\sum_{n=0}^{Np-1}\left(r(n_0 + D + n) \cdot r^*(n_0 + n)\right)^q\right) - F_0 \qquad (e5)$$

expression dans laquelle q est un nombre entier pair égal ou supérieur à deux, de sorte que dans le cas de symboles BPSK, un saut de phase éventuellement introduit lorsque les échantillons d'une paire appartiennent à deux symboles consécutifs, est supprimé.

Il est à noter qu'il est également possible de considérer, dans l'expression (e5) un nombre q égal à un. En effet, du fait que les Np paires d'échantillons sont choisies de sorte que plusieurs desdites paires appartiennent à un même symbole, la présence d'éventuels sauts de phase dans certaines grandeurs pourra être néanmoins supprimée.

Par exemple, si l'on se place dans le cas de Np paires consécutives d'échantillons, Np étant choisi égal à (Ne-D+1) :

$$\arg\left(\sum_{n=0}^{Ne-D}\left(r(n_0 + D + n)\cdot r^*(n_0 + n)\right)\right) = \arg\left((Ne - D \pm 1)\cdot e^{j\cdot2\cdot\pi\cdot(F_0 + fd)\cdot Te}\right) \quad (e6)$$

Par conséquent :

$$\arg\left(\sum_{n=0}^{Ne-D}\left(r(n_0 + D + n)\cdot r^*(n_0 + n)\right)\right) = 2\cdot\pi\cdot(F_0 + fd)\cdot Te$$

dans la mesure où D est choisi de sorte que le signal numérique comporte plusieurs paires d'échantillons différentes par symbole. En l'occurrence, le signal numérique comporte (Ne-D) paires consécutives d'échantillons, et D est par conséquent tel que (Ne-D) $\geq$ 2, et de sorte que (Ne-D$\pm$1) $\geq$ 1. On comprend donc que l'on peut considérer un nombre q égal à un sans que cela n'altère les performances de l'estimation pour des symboles BPSK (au bruit près, non considéré dans les expressions précédentes). Afin d'améliorer les performances, en particulier pour tenir compte de la présence d'un bruit additif et lorsque l'on utilise un nombre q égal à un (q = 1), on considère avantageusement un nombre Ne d'échantillons par symbole égal ou supérieur à dix, voire à cent.

Dans un mode particulier de mise en oeuvre, également illustré par la figure 3, plusieurs estimations du biais fréquentiel sont réalisées en fonction de grandeurs calculées pour des ensembles différents de paires d'échantillons, et le procédé 30 d'estimation comporte en outre une étape 306 de filtrage passe-bas desdites estimations du biais fréquentiel.

En d'autres termes, l'étape 306 de filtrage passe-bas vise à moyenner des estimations successives du biais fréquentiel afin de réduire le niveau d'un éventuel bruit affectant l'estimation.

Si l'on désigne par $f_{EST}(n_0)$ l'estimation calculée selon l'expression (e5), une nouvelle estimation $F_{EST}$ est par exemple déterminée au cours de l'étape 306 de filtrage passe-bas selon l'expression suivante :

$$F_{EST}(k) = \frac{1}{Nf}\cdot\sum_{i=0}^{Nf-1}f_{EST}(k - i) \quad\quad (e7)$$

expression dans laquelle Nf est le nombre d'estimations $f_{EST}(n)$ moyennées. De préférence, Nf est égal à 2·Ne.

La présente invention concerne également un procédé 40 de télécommunications pour échanger des données entre un terminal 10 et une station 20 du système 1 de télécommunications.

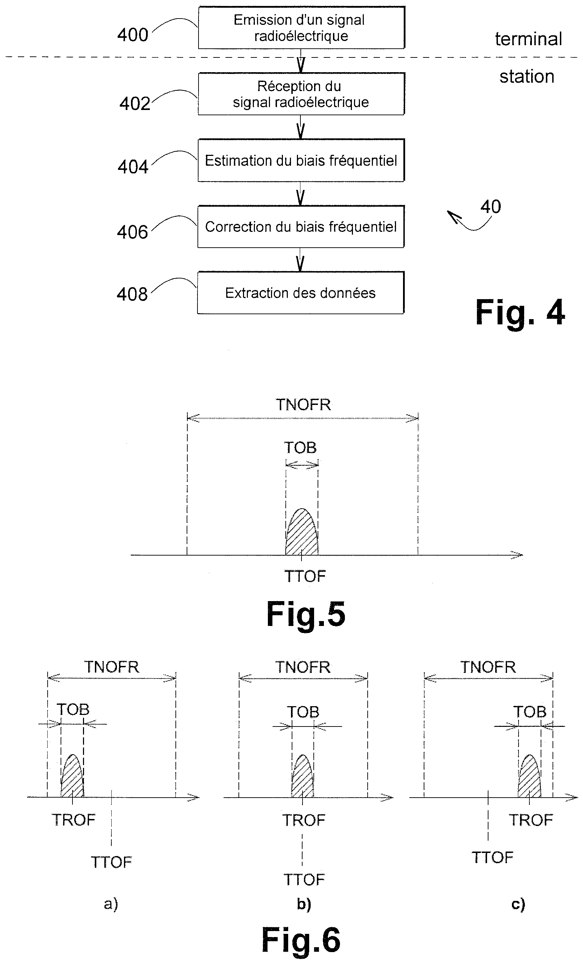

La figure 4 représente schématiquement les principales étapes d'un procédé 40 de télécommunications selon l'invention, lesquelles sont :

- 400 émission, par le terminal 10, d'une trame de symboles sous la forme d'un signal radioélectrique, de préférence monoporteuse,
- 402 réception dudit signal radioélectrique par la station 20,
- 404 estimation d'un biais fréquentiel affectant un signal numérique représentatif du signal radioélectrique,
- 406 compensation du biais fréquentiel affectant le signal numérique en fonction de l'estimation dudit biais fréquentiel,
- 408 extraction des données émises par le terminal 10.

La figure 5 représente schématiquement une sous-bande fréquentielle utilisée par un terminal 10 pour émettre un signal radioélectrique.

Il est à noter que le terminal 10 comporte des moyens de synthèse fréquentielle, considérés comme connus de l'homme de l'art, mis en oeuvre pour translater en fréquences les signaux à émettre sur fréquence porteuse.

Une telle sous-bande fréquentielle est déterminée principalement par sa fréquence centrale, dite « fréquence typique d'opération du terminal » TTOF (« Terminal Typical Operating Frequency ») et par sa largeur, dite « largeur fréquentielle d'opération naturelle du terminal » TNOFR (« Terminal Natural Operating Frequency Range »). La largeur fréquentielle d'opération TNOFR d'un terminal 10 correspond à la largeur fréquentielle effectivement occupée par un signal radioélectrique au cours du temps, en tenant compte d'une dérive en fréquence des moyens de synthèse fréquentielle de ce terminal 10 et en tenant compte de la largeur spectrale instantanée des signaux radioélectriques émis par ledit terminal 10, dite «largeur fréquentielle occupée» TOB (« Terminal Occupied Bandwidth »).

La largeur fréquentielle d'opération TNOFR est par conséquent sensiblement égale à la largeur fréquentielle occupée TOB à laquelle est ajoutée la dérive fréquentielle D (soit TOB+D), une dérive fréquentielle D de 1 kiloHertz (kHz) étant considérée comme correspondant à une précision de $\pm$ 500 Hz (soit $\pm$ D/2) autour de la fréquence typique d'opération TTOF.

La largeur fréquentielle occupée TOB est mesurée comme étant la bande à -10 décibels (dB), c'est-à-dire comme étant l'ensemble des fréquences pour lesquelles l'énergie mesurée présente une atténuation comprise entre 0 dB et -10 dB par rapport à l'énergie maximale mesurée pour une fréquence dans la bande du signal radioélectrique. En d'autres termes, les fréquences pour lesquelles l'énergie présente une atténuation plus importante que -10 dB (soit -20 dB, -30 dB, etc.) ne sont pas prises en compte dans la mesure de la largeur fréquentielle occupée TOB.

La dérive en fréquence des moyens de synthèse fréquentielle du terminal 10 a pour effet que la fréquence centrale instantanée du spectre des signaux radioélectriques émis par le terminal 10, dite «fréquence réelle d'opération du terminal » TROF (« Terminal Real Operating Frequency »), peut être sensiblement différente de la fréquence typique d'opération TTOF.

La figure 6 illustre cette dérive en fréquence de la fréquence réelle d'opération TROF par rapport à la fréquence typique d'opération TTOF du fait par exemple de la température. Les parties a), b) et c) représentent la fréquence réelle d'opération TROF dans la largeur fréquentielle d'opération TNOFR pour trois températures différentes.

De préférence, le spectre fréquentiel instantané des signaux radioélectriques émis par le terminal 10 au cours de l'étape 400 d'émission est de largeur fréquentielle occupée TOB inférieure à la dérive en fréquence d'un moyen de synthèse fréquentielle de ce terminal 10, voire significativement inférieure à ladite dérive en fréquence.

Par « significativement inférieure », on entend que la largeur fréquentielle occupée TOB est au moins cinq fois inférieure à la largeur fréquentielle d'opération TNOFR. En d'autres termes, la largeur fréquentielle d'opération TNOFR du terminal 10 est, du fait de la dérive en fréquence des moyens de synthèse fréquentielle dudit terminal, au moins cinq fois supérieure à la largeur TOB du spectre fréquentiel instantané des signaux radioélectriques émis par ledit terminal.

Suivant des modes particuliers de réalisation, la largeur fréquentielle occupée TOB est au moins dix fois inférieure à la largeur fréquentielle d'opération TNOFR, voire au moins cent fois inférieure.

On comprend que plus le rapport entre la largeur fréquentielle occupée TOB et la largeur fréquentielle d'opération TNOFR est petit, plus la dérive en fréquence est importante. On comprend cependant que plus la dérive en fréquence tolérée est importante plus des moyens de synthèse fréquentielle à bas coût peuvent être mis en oeuvre dans chacun des terminaux 10.

En outre, le manque de stabilité intrinsèque en fréquence des terminaux 10 (c'est-à-dire leur dérive en fréquence), peut être statistiquement tiré à profit pour diminuer la probabilité de collision entre des signaux radioélectriques émis par des terminaux 10 différents. Ainsi, lorsque deux terminaux 10 utilisent la même fréquence typique d'opération TTOF, la dérive fréquentielle D, qui est très supérieure à la largeur fréquentielle occupée TOB, permet de multiplexer en fréquence les signaux radioélectriques émis par ces terminaux 10 autour de ladite même fréquence typique d'opération TTOF.

On comprend que plus le rapport TOB/TNOFR entre la largeur fréquentielle occupée TOB et la largeur fréquentielle d'opération TNOFR diminue, plus la probabilité de collision entre des signaux radioélectriques émis par des terminaux 10 différents diminue.

Tel qu'on l'a vu, les systèmes très bas débits, par exemple du type réseau de capteurs, sont une application préférée de l'invention, bien que nullement limitative. Dans le cas d'un système très bas débit, dit « système à bande étroite », la largeur fréquentielle occupée TOB est par exemple de l'ordre de quelques Hertz à quelques centaines de Hertz.

La largeur fréquentielle d'opération TNOFR dépend de la technologie mise en oeuvre pour synthétiser les fréquences typiques d'opération TTOF. Dans le cas de moyens de synthèse fréquentielle comprenant un oscillateur à quartz, la précision sera par exemple de l'ordre de 2 à 40 ppm (« parts per million ») de sorte, que pour une fréquence typique d'opération TTOF égale à 1 gigahertz, la dérive en fréquence D sera sensiblement de l'ordre de 2 kHz ($\pm$ 1 kHz pour la précision de 2 ppm) à 40 kHz ($\pm$ 20 kHz pour la précision de 40 ppm). Dans ce cas, la largeur fréquentielle d'opération TNOFR sera sensiblement de l'ordre de 2 kHz à 40 kHz. Plus particulièrement, dans le cas d'une largeur fréquentielle occupée TOB de 100 Hz, la largeur fréquentielle d'opération TNOFR sera sensiblement de l'ordre de 2.1 kHz à 40.1 kHz, et le rapport TNOFR/TOB sera alors sensiblement de l'ordre de 21 à 401.

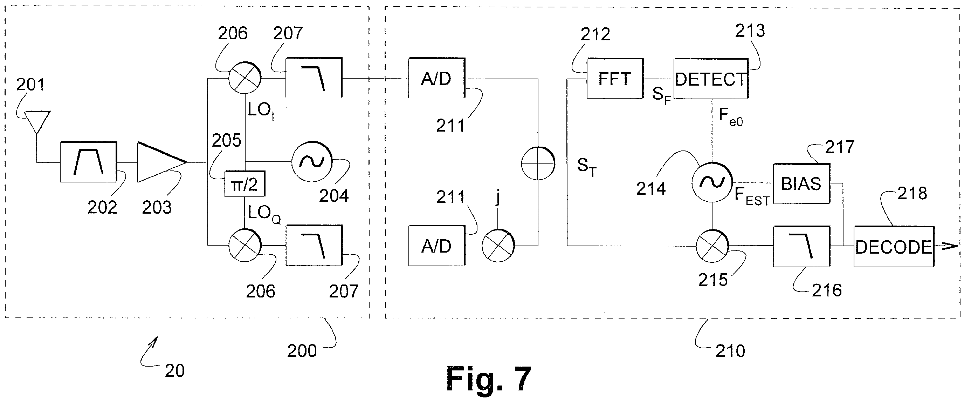

Au cours de l'étape 402, la station 20 reçoit le signal radioélectrique, émis par le terminal 10, en mettant en oeuvre des moyens considérés comme connus de l'homme de l'art, dont certains seront décrits ci-après en référence à la figure 7 de manière nullement limitative.

Au cours de l'étape 404, le procédé 30 d'estimation de biais fréquentiel selon l'invention est préférentiellement mis en oeuvre.

On comprend que lorsque les terminaux 10 sont équipés de moyens de synthèse fréquentielle de dérive fréquentielle très supérieure à la largeur du spectre fréquentiel des signaux radioélectriques émis, le biais fréquentiel à estimer peut varier au cours d'une même trame, voire au cours d'un même symbole. En pratique, la variation du biais fréquentiel à estimer peut alors être du même ordre de grandeur que la largeur fréquentielle occupée TOB.

Par conséquent la mise en oeuvre du procédé d'estimation selon l'invention pour estimer le biais fréquentiel s'avère tout à fait avantageuse.

En effet, ledit procédé 30 d'estimation, en particulier lorsque Ne est égal ou supérieur à dix, permet d'estimer le biais fréquentiel sur une durée de l'ordre de la durée symbole Ts qui est très inférieure à la durée d'une trame (même pour une trame comportant peu de symboles, par exemple moins de quelques dizaines de symboles), voire sur une durée inférieure à la durée symbole Ts. La période d'échantillonnage Te est de préférence suffisamment faible pour que le biais fréquentiel puisse être considéré comme sensiblement constant pendant ladite durée Te, compte tenu de la dérive fréquentielle des moyens de synthèse fréquentielle des terminaux 10,

En outre, dans le cas d'un système de télécommunications bas débit à bande étroite (largeur fréquentielle occupée TOB de l'ordre de quelques Hertz à quelques centaines de Hertz), on comprend que le nombre Ne d'échantillons par symbole pourra être grand (par exemple supérieur à dix) sans nécessiter l'emploi d'une fréquence d'échantillonnage trop élevée.

Au cours de l'étape 406, le biais fréquentiel est compensé en fonction de l'estimation de ce biais fréquentiel. Une telle compensation vise à compenser la variation de phase induite d'un échantillon à l'autre par ledit biais fréquentiel. Cette compensation peut s'effectuer de toute manière adaptée connue de l'homme de l'art et qui sortent du cadre de l'invention.

Par exemple, la compensation peut s'effectuer selon l'expression :

$$r_C(n) = r(n) \cdot e^{-j \cdot 2 \cdot \pi \cdot f_{EST} \cdot n \cdot Te}$$

ou, lorsque le procédé 30 d'estimation comporte une étape 306 de filtrage passe-bas, selon l'expression :

$$r_C(n) = r(n) \cdot e^{-j \cdot 2 \cdot \pi \cdot F_{EST} \cdot n \cdot Te}$$

Au cours de l'étape 408, les données émises par le terminal 10 sont déterminées à partir des échantillons $r_C(n)$. L'implémentation exacte de cette étape 408 d'extraction de données dépend d'un protocole prédéfini de mise en forme des données émises par les terminaux 10, et met en oeuvre des moyens considérés comme connus de l'homme de l'art

La figure 7 représente de façon schématique un mode préféré de réalisation de la station 20. On note que la station 20 peut également comporter d'autres éléments non représentés sur ladite figure 7.

Dans cet exemple non limitatif, la station 20 comporte principalement un module analogique 200 et un module numérique 210.

Tel qu'illustré par la figure 7, le module analogique 200 comporte notamment :

- une antenne 201 adaptée à recevoir des signaux radioélectriques dans une bande de multiplexage MC (« Multiplex Channel ») dans laquelle les terminaux 10 sont susceptibles d'émettre,
- un filtre passe-bande 202, dit « filtre d'antenne », adapté à filtrer des signaux indésirables en dehors de la bande de multiplexage MC,
- un amplificateur faible bruit 203,
- un oscillateur local 204 adapté à former un signal sensiblement sinusoïdal, désigné par $LO_I$, de fréquence sensiblement égale à une fréquence centrale de la bande de multiplexage MC, désignée par « fréquence centrale de multiplexage » MCCF (« Multiplex Channel Central Frequency »).
- un déphaseur 205 adapté à former une réplique en quadrature de phase du signal $LO_I$, désignée par $LO_Q$,
- deux mélangeurs 206 adaptés à mélanger un signal en sortie du filtre d'antenne 202 avec respectivement le signal $LO_I$ et le signal $LO_Q$,
- deux filtres passe-bas 207 en sortie respectivement de chaque mélangeur 206, désignés par « filtres anti-repliement », de fréquence de coupure par exemple sensiblement égale à la moitié de la largeur fréquentielle MCB (« Multiplex Channel Bandwidth ») de la bande de multiplexage (soit MCB/2).

Tel qu'illustré par la figure 7, le module numérique 210 comporte notamment deux convertisseurs analogique / numérique (A/D) 211 adaptés à échantillonner les signaux en sortie respectivement de chaque filtre anti-repliement 207, par exemple avec une fréquence d'échantillonnage sensiblement égale à la largeur fréquentielle de multiplexage MCB.

**EP 2 732 592 B1**

Les signaux en sortie des convertisseurs A/D 211 correspondent respectivement à la partie réelle et à la partie imaginaire d'un signal complexe désigné par $S_T$. Cette représentation complexe est schématisée sur la figure 7 par l'addition des signaux en sortie des convertisseurs A/D 211, l'un desdits signaux étant préalablement multiplié par l'unité imaginaire j.

Le module numérique 210 comporte ensuite plusieurs modules fonctionnels.

Tout d'abord, le module numérique 210 comporte un module FFT 212 (« Fast Fourier Transform »), adapté à transposer le signal complexe $S_T$ du domaine temporel au domaine fréquentiel, de sorte à obtenir un signal complexe $S_F$ représentatif du spectre fréquentiel du signal complexe $S_T$.

Le module numérique 210 comporte ensuite un module détecteur 213, adapté à rechercher dans le signal complexe $S_F$ des fréquences pour lesquelles des pics d'énergie sont obtenus, susceptibles de correspondre à la présence d'un signal radioélectrique émis par un terminal 10.

En effet, la station 20 ne connaît pas nécessairement les fréquences utilisées par les différents terminaux 10, en particulier du fait que la fréquence réelle d'opération TROF d'un terminal 10 peut être très différente de la fréquence typique d'opération TTOF de ce terminal du fait de la dérive en fréquence. L'utilisation du module FFT 212 et du module détecteur 213 permet par conséquent de déterminer si des terminaux 10 sont en train d'émettre des signaux radioélectriques et, le cas échéant, d'estimer leurs fréquences réelles d'opération TROF.

A cet effet, le module FFT 212 doit être adapté à fournir un signal complexe $S_F$ avec une granularité dans le domaine fréquentiel permettant de détecter un signal radioélectrique de largeur fréquentielle occupée TOB. Dans le cas où plusieurs largeurs fréquentielles occupées sont possibles, on considère de préférence la largeur fréquentielle occupée minimale $TOB_{MIN}$. Par exemple, en considérant une fréquence d'échantillonnage sensiblement égale à la largeur fréquentielle de multiplexage MCB, le module FFT 212 est par exemple configuré pour obtenir des échantillons fréquentiels, dans la bande fréquentielle allant de 0 Hz à MCB, avec un pas égal à $MCB/TOB_{MIN}$, soit pour les fréquences élémentaires 0, $TOB_{MIN}$, $2 \cdot TOB_{MIN}$, $3 \cdot TOB_{MIN}$, ..., $MCB\text{-}TOB_{MIN}$.

Le module détecteur 213 mesure par exemple l'énergie pour chaque fréquence élémentaire. Un critère de détection d'un signal émis par un terminal 10 est par exemple vérifié lorsque l'énergie mesurée pour une fréquence élémentaire est supérieure à une valeur seuil prédéfinie.

Lorsqu'un signal été détecté par le module détecteur 213, par exemple autour d'une fréquence élémentaire de valeur $F_{e0}$, ladite valeur $F_{e0}$ est fournie en entrée d'un module oscillateur local variable 214, qui génère un signal sinusoïdal complexe de fréquence $F_{e0}$ (comportant des échantillons du type $\exp(j \cdot 2 \cdot \pi \cdot F_{e0} \cdot n/MCB)$).

Le signal complexe $S_T$ est multiplié au complexe conjugué du signal sinusoïdal complexe de fréquence $F_{e0}$ au moyen d'un module multiplieur 215. Cette multiplication permet de ramener le signal, détecté autour de la fréquence élémentaire de valeur $F_{e0}$, autour de la fréquence nulle 0 Hz.

Le module numérique 210 comporte ensuite un module filtre passe-bas 216, de fréquence de coupure sensiblement égale à la moitié de la largeur fréquentielle occupée TOB (soit TOB/2). Dans le cas où plusieurs largeurs fréquentielles occupées sont possibles, on considère de préférence la largeur fréquentielle occupée maximale $TOB_{MAX}$ (soit une fréquence de coupure sensiblement égale à $TOB_{MAX}/2$).

Le module numérique 210 comporte ensuite un module estimateur 217 de biais fréquentiel.

Le module estimateur 217 comporte des moyens configurés pour estimer le biais fréquentiel affectant le signal numérique conformément à un procédé 30 d'estimation selon l'invention. Lesdits moyens du module estimateur 217 sont par exemple des moyens logiciels se présentant sous la forme d'instructions de code de programme d'ordinateur, mémorisées dans une mémoire non volatile de l'unité centrale de la station 20, qui lorsqu'elles sont exécutées par ladite unité centrale mettent en oeuvre les différentes étapes du procédé 30 d'estimation.

En alternative ou en complément, lesdits moyens du module estimateur 217 comportent un ou des circuits logiques programmables de type FPGA, PLD, CPLD, etc., configurés pour mettre tout ou partie des différentes étapes du procédé 30 d'estimation.

Dans l'exemple non limitatif illustré par la figure 7, la valeur estimée $F_{EST}$ du biais fréquentiel est fournie en entrée du module oscillateur local variable 214. Ledit module oscillateur local variable génère alors un signal sinusoïdal complexe de fréquence $(F_{e0}+F_{EST})$ (comportant des échantillons du type $\exp(j \cdot 2 \cdot \pi \cdot (F_{e0}+F_{EST}) \cdot n/MCB)$), dont le complexe conjugué est multiplié au signal complexe $S_T$ au moyen du module multiplieur 215.

Il est à noter que le module estimateur 217 peut conserver tous les échantillons reçus du module filtre passe-bas 216, auquel la période d'échantillonnage Te susmentionnée est égale à 1/MCB. En alternative, le module estimateur 217 effectue un sous-échantillonnage des échantillons reçus du module filtre passe-bas 216: dans ce cas la période d'échantillonnage Te susmentionnée est supérieure à 1/MCB, par exemple égale à K/MCB, K étant un facteur de sous-échantillonnage prédéfini.

Le module numérique 210 comporte ensuite un module décodeur 218 adapté à extraire les données émises par un terminal 10. L'implémentation exacte du module de décodage 218 dépend d'un protocole prédéfini de mise en forme des données émises par les terminaux 10, et met en oeuvre des moyens considérés comme connus de l'homme de l'art.

11

Il est à noter que le module détecteur 213 peut être amené à détecter plusieurs fréquences élémentaires susceptibles de correspondre à des signaux émis par des terminaux 10. Par exemple, le module détecteur 213 peut être amené à détecter un nombre Ns de telles fréquences élémentaires. Dans ce cas, les modules oscillateur local variable 214, multiplieur 215, filtre passe-bas 216, estimateur 217 et décodeur 218 sont avantageusement répliqués Ns fois afin de traiter en parallèle les signaux autour de chacune des Ns fréquences élémentaires susceptibles d'être utilisées par un terminal 10.

La description ci-avant illustre clairement que par ses différentes caractéristiques et leurs avantages, la présente invention atteint les objectifs qu'elle s'était fixés.

En particulier, l'invention propose un procédé 30 d'estimation de biais fréquentiel particulièrement adapté aux systèmes de télécommunications bas débit à bande étroite, en particulier de tels systèmes dans lesquels les trames émises comportent peu de symboles.

En effet, le procédé 30 d'estimation ne nécessite pas de séquences d'apprentissage, lesquelles réduiraient de façon trop importante l'efficacité du système de télécommunications.

De plus, le procédé 30 d'estimation permet d'estimer le biais fréquentiel en considérant des échantillons dans une fenêtre temporelle de durée de l'ordre de la durée symbole Ts, voire inférieure à ladite durée symbole Ts, du fait notamment que le signal numérique traité comporte de nombreux échantillons par symbole. De la sorte, le procédé 30 d'estimation permet également de poursuivre la variation du biais fréquentiel au cours d'une même trame de symboles. Par conséquent, des moyens de synthèse fréquentielle peu coûteux peuvent être mis en oeuvre dans chacun des terminaux 10, y compris des moyens dont la dérive fréquentielle est très supérieure à la largeur fréquentielle TOB du spectre fréquentiel instantané des signaux radioélectriques émis par les terminaux 10.

**Revendications**

1. Procédé (30) d'estimation d'un biais fréquentiel affectant un signal numérique représentatif d'une trame de symboles émise par un terminal (10) à destination d'une station (20) d'un système (1) de télécommunications numériques, ledit biais fréquentiel correspondant à un écart entre une fréquence centrale supposée d'un spectre fréquentiel du signal numérique et une fréquence centrale réelle dudit spectre fréquentiel, **caractérisé en ce que** le procédé comporte les étapes de :

   - (300) obtention du signal numérique par échantillonnage d'un signal analogique, représentatif de la trame de symboles, avec une période d'échantillonnage Te inférieure à une durée prédéfinie de chacun des symboles de la trame, de sorte que le signal numérique comporte au moins trois échantillons par symbole,
   - (304) estimation du biais fréquentiel affectant le signal numérique en fonction de grandeurs calculées (302) respectivement pour Np paires d'échantillons choisies de sorte que plusieurs desdites Np paires appartiennent nécessairement à un même symbole de la trame, chaque grandeur étant représentative d'une différence de phase entre les échantillons de la paire d'échantillons considérée, les échantillons de chacune des Np paires étant séparés par un même nombre D non nul de périodes d'échantillonnage.

2. Procédé (30) selon la revendication 1, **caractérisé en ce que** le biais fréquentiel est estimé en fonction de grandeurs calculées pour Np paires d'échantillons choisies de sorte que tous les échantillons desdites Np paires appartiennent nécessairement à au plus deux symboles consécutifs de la trame.

3. Procédé (30) selon l'une des revendications 1 à 2, **caractérisé en ce que** la période d'échantillonnage Te est telle que le signal numérique comporte au moins dix échantillons par symbole, de préférence au moins cent échantillons par symbole.

4. Procédé (30) selon l'une des revendications précédentes, **caractérisé en ce que** le biais fréquentiel $f_{EST}$ est estimé selon l'expression suivante :

$$f_{EST} = \frac{1}{2 \cdot q \cdot D \cdot \pi \cdot Te} \cdot \arg\left(\sum_{n=0}^{Np-1} \left(r(n_0 + D + n) \cdot r^*(n_0 + n)\right)^q\right) - F_0$$

expression dans laquelle :

   - r(n) est un échantillon du signal numérique correspondant à l'instant d'échantillonnage n·Te, r(n_0) étant le

premier échantillon des échantillons des Np paires considérées,
- r*(n) est le complexe conjugué de r(n),
- arg(x) correspond à la phase du nombre complexe x,
- q est soit égal à un soit égal à un nombre pair,
- $F_0$ est la fréquence centrale supposée du signal numérique.

5. Procédé (30) selon l'une des revendications précédentes, **caractérisé en ce que** le nombre D est égal à un.

6. Procédé (30) selon l'une des revendications précédentes, **caractérisé en ce que** plusieurs estimations du biais fréquentiel sont réalisées en fonction de grandeurs calculées pour des ensembles différents de paires d'échantillons, et **en ce que** le procédé comporte une étape (306) de filtrage passe-bas desdites estimations du biais fréquentiel.

7. Procédé (40) de télécommunications pour échanger des données entre un terminal (10) et une station (20) d'un système (1) de télécommunications numériques, lesdites données étant échangées sous la forme d'une trame de symboles, **caractérisé en ce qu'**il comporte les étapes de :

- (400) émission, par le terminal, d'une trame de symboles sous la forme d'un signal radioélectrique dont le spectre fréquentiel instantané est de largeur inférieure à une dérive fréquentielle d'un moyen de synthèse fréquentielle dudit terminal,
- (402) réception dudit signal radioélectrique par la station (20),
- (404) estimation d'un biais fréquentiel affectant un signal numérique représentatif du signal radioélectrique conformément à un procédé d'estimation selon l'une quelconque des revendications 1 à 6,
- (406) compensation du biais fréquentiel affectant le signal numérique en fonction de l'estimation dudit biais fréquentiel,
- (408) extraction des données émises par le terminal (10).

8. Module (217) d'estimation d'un biais fréquentiel affectant un signal numérique représentatif d'une trame de symboles émise par un terminal à destination d'une station (20), ledit biais fréquentiel correspondant à un écart entre d'une part une fréquence centrale supposée d'un spectre fréquentiel du signal numérique et d'autre part une fréquence centrale réelle dudit spectre fréquentiel, **caractérisé en ce qu'**il comporte des moyens configurés pour estimer le biais fréquentiel affectant le signal numérique conformément à un procédé (30) selon l'une quelconque des revendications 1 à 6.

9. Station (20) d'un système (1) de télécommunications numériques, **caractérisée en ce qu'**elle comporte un module (217) d'estimation de biais fréquentiel affectant un signal numérique selon la revendication 8.

10. Système (1) de télécommunications numériques, **caractérisé en ce qu'**il comporte :

- une station (20) selon la revendication 9,
- au moins un terminal (10) configuré pour émettre des données sous la forme de signaux radioélectriques dont le spectre fréquentiel instantané est de largeur inférieure à une dérive fréquentielle d'un moyen de synthèse fréquentielle dudit au moins un terminal (10).

**Patentansprüche**

1. Verfahren (30) zum Schätzen einer Frequenzverzerrung, die ein digitales Signal betrifft, welches für einen von einem Endgerät (10) an Ziel einer Station (20) eines digitalen Telekommunikationssystems (1) gesendeten Symbol-Frame repräsentativ ist, wobei die Frequenzverzerrung einer Abweichung zwischen einer angenommenen Mittenfrequenz eines Frequenzspektrums des digitalen Signals und einer tatsächlichen Mittenfrequenz des Frequenzspektrums entspricht, **dadurch gekennzeichnet, dass** das Verfahren die Schritte umfasst des:

- (300) Erhaltens des digitalen Signals durch Abtasten eines für den Symbol-Frame repräsentativen analogen Signals mit einer Abtastperiode Te, die kleiner ist als eine vordefinierte Dauer jedes der Symbole des Frames, sodass das digitale Signal mindestens drei Abtastungen pro Symbol umfasst,
- (304) Schätzens der das digitale Signal betreffenden Frequenzverzerrung in Abhängigkeit von Größen, die jeweils für Np Abtastpaare berechnet (302) werden, welche so ausgewählt werden, dass mehrere der Np Paare zwingend zu ein und demselben Symbol des Frames gehören, wobei jede Größe für eine Phasendifferenz zwischen den Abtastungen des betrachteten Abtastpaares repräsentativ ist, wobei die Abtastungen jedes der Np Paare durch ein und dieselbe Zahl D, ungleich Null, von Abtastperioden getrennt sind.

2. Verfahren (30) nach Anspruch 1, **dadurch gekennzeichnet, dass** die Frequenzverzerrung in Abhängigkeit von Größen geschätzt wird, die für Np Abtastpaare berechnet werden, welche so ausgewählt werden, dass alle die Abtastungen der Np Paare zwingend zu höchstens zwei aufeinanderfolgenden Symbolen des Frames gehören.

3. Verfahren (30) nach einem der Ansprüche 1 bis 2, **dadurch gekennzeichnet, dass** die Abtastperiode Te derart ist, dass das digitale Signal mindestens sechs Abtastungen pro Symbol, vorzugsweise mindestens hundert Abtastungen pro Symbol umfasst.

4. Verfahren (30) nach einem der vorstehenden Ansprüche, **dadurch gekennzeichnet, dass** die Frequenzverzerrung $f_{EST}$ gemäß dem folgenden Ausdruck geschätzt wird:

$$f_{EST} = \frac{1}{2 \cdot q \cdot D \cdot \pi \cdot Te} \cdot arg\left(\sum_{n=0}^{Np-1}\left(r(n_0 + D + n) \cdot r^*(n_0 + n)\right)^q\right) - F_0$$

Ausdruck, in dem:

- r(n) eine Abtastung des digitalen Signals ist, die einem Abtastzeitpunkt n•Te entspricht, wobei $r(n_0)$ die erste Abtastung der Abtastungen der Np betrachteten Paare ist,
- r*(n) der konjugierte Komplex von r(n) ist,
- arg(x) der Phase der komplexen Zahl x entspricht,
- q entweder gleich eins oder gleich einer geraden Zahl ist,
- $F_0$ die angenommene Mittenfrequenz des digitalen Signals ist.

5. Verfahren (30) nach einem der vorstehenden Ansprüche, **dadurch gekennzeichnet, dass** die Zahl D gleich eins ist.

6. Verfahren (30) nach einem der vorstehenden Ansprüche, **dadurch gekennzeichnet, dass** mehrere Schätzungen der Frequenzverzerrung in Abhängigkeit von Größen ausgeführt werden, die für verschiedene Sätze von Abtastpaaren berechnet werden, und dadurch, dass das Verfahren einen Schritt (306) des Tiefpassfilterns der Schätzungen der Frequenzverzerrung umfasst.

7. Telekommunikationsverfahren (40), um Daten zwischen einem Endgerät (10) und einer Station (20) eines digitalen Telekommunikationssystems (1) auszutauschen, wobei die Daten in der Form eines Symbol-Frames ausgetauscht werden, **dadurch gekennzeichnet, dass** es die Schritte umfasst des:

- (400) Sendens, durch das Endgerät, eines Symbol-Frames in der Form eines Funksignals, dessen momentanes Frequenzspektrum von kleinerer Breite ist als eine Frequenzdrift eines Frequenzsynthesemittels des Endgeräts,
- (402) Empfangens des Funksignals durch die Station (20),
- (404) Schätzens einer Frequenzverzerrung, die ein für das Funksignal repräsentatives digitales Signal betrifft, in Übereinstimmung mit einem Schätzverfahren nach einem der Ansprüche 1 bis 6,
- (406) Kompensierens der das digitale Signal betreffenden Frequenzverzerrung in Abhängigkeit von der Schätzung der Frequenzverzerrung,
- (408) Extrahierens der vom Endgerät (10) gesendeten Daten.

8. Modul (217) zum Schätzen einer Frequenzverzerrung, die ein digitales Signal betrifft, welches für einen von einem Endgerät an Ziel einer Station (20) gesendeten Symbol-Frame repräsentativ ist, wobei die Frequenzverzerrung einer Abweichung zwischen einerseits einer angenommenen Mittenfrequenz eines Frequenzspektrums des digitalen Signals, und andererseits einer tatsächlichen Mittenfrequenz des Frequenzspektrums entspricht, **dadurch gekennzeichnet, dass** es Mittel umfasst, die dafür konfiguriert sind, die das digitale Signal betreffende Frequenzverzerrung in Übereinstimmung mit einem Verfahren (30) nach einem der Ansprüche 1 bis 6 zu schätzen.

9. Station (20) eines digitalen Telekommunikationssystems (1), **dadurch gekennzeichnet, dass** sie ein Modul (217) zum Schätzen der ein digitales Signal betreffenden Frequenzverzerrung nach Anspruch 8 umfasst.

**10.** Digitales Telekommunikationssystem (1), **dadurch gekennzeichnet, dass** es umfasst:

- eine Station (20) nach Anspruch 9,
- mindestens ein Endgerät (10), das dafür konfiguriert ist, Daten in der Form von Funksignalen zu senden, deren momentanes Frequenzspektrum von kleinerer Breite ist als eine Frequenzdrift eines Frequenzsynthesemittels des mindestens einen Endgeräts (10).

**Claims**

**1.** A method (30) of estimating a frequency bias affecting a digital signal representative of a frame of symbols transmitted by a terminal (10) to a station (20) of a digital telecommunication system (1), said frequency bias corresponding to a difference between a supposed central frequency of a frequency spectrum of the digital signal and a real central frequency of said frequency spectrum, **characterized in that** it comprises the steps of:

- (300) generating the digital signal by sampling of an analog signal, representative of the frame of symbols, with a sampling period Te shorter than a predefined duration of each of the frame symbols, such that the digital signal comprises at least three samples per symbol,
- (304) estimating the frequency bias affecting the digital signal according to values (302) calculated for Np pairs of samples selected so that several of said Np pairs necessarily belong to a same symbol of the frame, each value being representative of a phase difference between the samples of the considered pair of samples, the samples of each of the Np pairs being separated by a same non-zero number D of sampling periods.

**2.** The method (30) of claim 1, **characterized in that** the frequency bias is estimated according to values calculated for Np pairs of samples selected so that all the samples of said Np pairs necessarily belong to at most two consecutive samples of the frame.

**3.** The method (30) of any of claims 1 to 2, **characterized in that** sampling period Te is such that the digital signal comprises at least ten samples per symbol, preferably at least one hundred samples per symbol.

**4.** The method (30) of any of the foregoing claims, **characterized in that** frequency bias $f_{EST}$ is estimated according to the following relation:

$$f_{EST} = \frac{1}{2 \cdot q \cdot D \cdot \pi \cdot Te} \cdot \arg\left(\sum_{n=0}^{Np-1} \left(r(n_0 + D + n) \cdot r^*(n_0 + n)\right)^q\right) - F_0$$

where:

- r(n) is a sample of the digital signal corresponding to sampling time n.Te, $r(n_0)$ being the first sample of the samples of the Np considered pairs,
- r*(n) is the conjugate complex of r(n),
- arg(x) corresponds to the phase of complex number x,
- q is either equal to one, or equal to an even number,
- $F_0$ is the supposed central frequency of the digital signal.

**5.** The method (30) of any of the foregoing claims, **characterized in that** number D is equal to one.

**6.** The method (30) of any of the foregoing claims, **characterized in that** a plurality of estimates of the frequency bias are performed according to values calculated for different sets of pairs of samples, and **in that** the method comprises a step (306) of low-pass filtering of said estimates of the frequency bias.

**7.** A telecommunications method (40) for exchanging data between a terminal (10) and a station (20) of a digital telecommunication system (1), said data being exchanged in the form of a frame of symbols, **characterized in that** it comprises the steps of:

- (400) transmission, by the terminal, of a frame of symbols in the form of a radio-frequency signal having its instantaneous frequency spectrum of a width smaller than a frequency drift of frequency synthesis means of said terminal,
- (402) reception of said radio-frequency signal by the station (20),
- (404) estimating a frequency bias affecting a digital signal representative of the radio-frequency signal in accordance with the estimation method of any of claims 1 to 6,
- (406) compensating the frequency bias affecting the digital signal according to the estimate of said frequency bias,
- (408) extracting the data transmitted by the terminal (10).

8. A module (217) for estimating a frequency bias affecting a digital signal representative of a frame of symbols transmitted by a terminal to a station (20), said frequency bias corresponding to a difference between, on the one hand, a supposed central frequency of a frequency spectrum of the digital signal and, on the other hand, a real central frequency of said frequency spectrum, **characterized in that** it comprises means configured to estimate the frequency bias affecting the digital signal in accordance with the estimation method (30) of any of claims 1 to 6.

9. A station (20) of a digital telecommunication system (1), **characterized in that** it comprises the module (217) for estimating the frequency bias affecting a digital signal of claim 8.

10. A digital telecommunication system (1), **characterized in that** it comprises:

- the station (20) of claim 9,
- at least one terminal (10) configured to transmit data in the form of radio-frequency signals having an instantaneous frequency spectrum of a width smaller than a frequency drift of frequency synthesis means of said at least one terminal (10).

**Fig. 1**

**Fig. 2**

**Fig. 3**

**Fig. 4**

**Fig.5**

a)            b)            c)

**Fig.6**

**Fig. 7**

EP 2 732 592 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6567480 B1